# EUROPÄISCHE PATENTANMELDUNG

(11) **EP 1 655 497 A2**
(43) Veröffentlichungstag der Anmeldung: **10.05.2006**
(21) Anmeldenummer: 05109437.3
(22) Anmeldetag: 11.10.2005
(51) Int. Cl.: F16B 5/06, F16B 2/02, H01R 4/48, F16F 1/368, F16B 21/12, B60S 1/04

(54) **Befestigungselement**

(30) Priorität: 09.11.2004 DE 102004054009
(71) Anmelder: ROBERT BOSCH GMBH, 70442 Stuttgart (DE)
(72) Erfinder: Eschenbrenner, Nicolas, 67100, Strasbourg (FR); Porchet, Frank, 92700, Colombes (FR)

(57) **Zusammenfassung**

Die Erfindung betrifft ein Befestigungselement (10) um mindestens zwei Bauteile (11, 12) aneinander zu befestigen, insbesondere zur Befestigung einer Scheibenwischanlage an einer Kraftfahrzeugkarosserie. Bisher werden Scheibenwischanlagen an die Karosserie geschraubt oder genietet. Zum Verschrauben oder Vernieten werden jedoch spezielle Werkzeuge und ein relativ hoher Zeitbedarf benötigt. Die Erfindung hat die Aufgabe die Montage zukünftig schneller und kostengünstiger durchführen zu können. Deshalb sind erfindungsgemäß zwei Bauteile (11, 12) mittels mindestens einer Feder (15) aneinander befestigbar.

## Beschreibung

Die Erfindung betrifft ein Befestigungselement, um mindestens zwei Bauteile aneinander zu befestigen, insbesondere zur Befestigung einer Scheibenwischanlage an einer Kraftfahrzeugkarosserie.

Bisher werden Scheibenwischanlagen an die Karosserie geschraubt oder genietet. Für die Verschraubung oder die Vernietung benötigt man spezielle Werkzeuge. Außerdem erfordert die Verschraubung oder die Vernietung einen relativ hohen Zeitbedarf, der die Montagekosten erhöht.

Die Erfindung hat die Aufgabe, das Befestigungselement der eingangs genannten Art dahingehend zu verbessern, dass die Montage zukünftig schneller und somit kostengünstiger durchgeführt werden kann.

Die Erfindung löst die gestellte Aufgabe durch ein Befestigungselement der eingangs genannten Art, bei dem erfindungsgemäß die mindestens zwei Bauteile mittels einer Feder aneinander befestigt werden. Die Feder erzeugt die für die Befestigung erforderlichen Haltekräfte. Folglich können zukünftig Schrauben, Nieten und dergleichen entfallen. Das Montagepersonal muss lediglich mit einem einfachen Handgriff die Feder in die vorgesehene Position bringen, damit die aneinander zu befestigenden Teile aneinander befestigt werden.

Abhängig von den jeweiligen Anforderungen des entsprechenden Anwendungsfalls kann die mindestens eine Feder eine Drahtfeder, eine Kunststofffeder, eine pneumatische Feder oder dergleichen sein. Somit ist das erfindungsgemäße Befestigungselement flexibel an die jeweiligen Gegebenheiten anpassbar.

In einer bevorzugten Ausführungsform kann das Befestigungselement ein Halteelement aufweisen, das einenends durch die zu befestigenden Bauteile steckbar ist, und das anderenends eine Abstützeinrichtung aufweist, an der sich die gegen eines der Bauteile drückende Feder abstützt, wobei das Halteelement gegen ein Herausziehen aus den Bauteilen arretierbar ist. Dies ist eine einfache und somit auch bei hohen Stückzahlen preiswerte Konstruktion, bei der die aneinander zu befestigenden Bauteile mittels der Feder aneinander befestigt werden.

Die Abstützeinrichtung kann einfacherweise als ein Teller ausgebildet sein. Für die Abstützeinrichtung sind jedoch auch andere dem Fachmann bekannte Ausführungen möglich.

Das Halteelement kann einen bolzenförmigen Schaft aufweisen, der durch die Feder gesteckt ist. Somit kann die Feder zuverlässig die Bauteile aneinander drücken, wobei ein Knicken der Feder ausgeschlossen ist.

Um das Halteelement mit geringen Kräften durch die zu befestigenden Bauteile stecken zu können, kann es an seinem durch die Bauteile steckbaren Ende eine schlitzförmige Aussparung aufweisen.

Damit das Halteelement gegen ein Herausziehen aus den Bauteilen gesichert ist, kann es an seinem durch die Bauteile steckbaren Ende mit einem Widerhaken versehen sein.

Die Feder kann mit einem Haltestift unter einer bestimmten Vorspannung arretiert werden, wobei der Haltestift lösbar durch den Schaft gesteckt ist. Wenn bei der Montage des Befestigungselements das Halteelement durch die Bauteile gesteckt wurde, kann der die Feder vorspannende Haltestift aus dem Schaft gezogen werden, sodass die Feder die Bauteile aneinander drückt.

In einer zweiten bevorzugten Ausführungsform kann ein Formrohr mittels der Feder mit der Karosserie verspannt werden. Dann können an dem Formrohr quer zu dessen Längsrichtung zwei gegenüberliegende Bolzen angeordnet sein, wobei an einem freien Ende des einen Bolzens die Feder angeordnet ist, und am freien Ende des anderen Bolzens ein in eine in der Karosserie vorgesehene Öffnung einsteckbarer Steckpunkt angeordnet ist. Dies ist eine besonders elegante Lösung, weil das erfindungsgemäße Befestigungselement schon in das an der Karosserie zu befestigende Formrohr integriert ist.

Wenn die Feder mit einer entlang des Bolzens verschiebbaren Hülse unter einer bestimmten Vorspannung arretiert werden kann, wird vermieden, dass das Formrohr von der Feder gegen die Karosserie gedrückt wird, bevor es in seine endgültige Position gebracht wurde.

Der Bolzen kann eine Führungsnut aufweisen, in die ein an der Hülse angeordneter Fortsatz eingreift. Wenn der Bolzen durch die Feder zur Karosserie hin verschoben wird, kann der Fortsatz in der Führungsnut entlang gleiten.

Damit sich das Formrohr nach dem es an der Karosserie befestigt wurde nicht unerwünschterweise entgegen der Wirkrichtung der Feder bewegen kann, kann die Führungsnut mit Zähnen versehen sein, wobei die Zähne in der Weise ausgebildet sind, dass die Hülse nur in Richtung des freien Bolzenendes bewegbar ist.

Die Führungsnut kann an ihrem dem Formrohr zugewandten Ende quer zur Längsachse des Bolzens verlaufen. Dadurch wird die Hülse in Längsrichtung des Bolzens arretiert, wodurch eine vorzeitige Verschiebung des Formrohrs ausgeschlossen wird. Somit muss die in der Führungsnut geführte Hülse erst um einen geringen Winkel gedreht werden, bevor die Feder den Bolzen verschieben kann. Dadurch kann ein versehentliches Entspannen der Feder bevor das Formrohr richtig positioniert ist vermieden werden. Dies ist deshalb sinnvoll, weil die Zähne der Hülse nur die Bewegung zum freien Bolzenende gestatten, aber nicht in die entgegengesetzte Richtung, sodass ein erneutes Spannen der Feder nicht möglich ist.

Damit die Feder das Formrohr gegen die Öffnung in der Karosserie drücken kann, ist die Hülse mit einem am Fahrzeug befestigten Rohr verbunden. Das am Fahrzeug befestigte Rohr übernimmt die Funktion eines Widerlagers, und die Hülse die zusätzliche Funktion eines Verlängerungsstücks zwischen dem Formrohr und dem Rohr.

Bei einer Alternative der zweiten Ausführungsform sind an dem Formrohr quer zu dessen Längsrichtung zwei gegenüberliegende Bolzen angeordnet, wobei über einen der Bolzen die Feder gesteckt ist. Der Bolzen stützt dann die Feder und verhindert somit deren Einknicken.

Die Feder kann mit einem lösbaren Haltestift unter einer bestimmten Vorspannung arretiert werden, wobei der Haltestift lösbar durch den Bolzen gesteckt ist. Sobald das Formrohr vor der Öffnung in der Karosserie positioniert ist, kann der Haltestift aus dem Bolzen herausgezogen werden. Dann drückt die Feder das Formrohr in die Öffnung der Karosserie, sodass es an der Karosserie befestigt ist.

Damit die Feder das Formrohr an die Karosserie drücken kann, ist einer der Bolzen mit dem Fahrzeug verbunden, der somit die Funktion eines Widerlagers übernimmt.

In einer dritten Ausführungsform kann die mindestens eine Feder im montierten Zustand die zu befestigenden Bauteile umgreifen. Die Feder drückt dabei die beiden Bauteile aneinander.

Zur Montage des Befestigungselements können ein Federhalter und eine die mindestens eine Feder umgebende Hülse die Feder vorspannen. Somit kann die Feder mühelos durch eine in den aneinander zu befestigenden Bauteilen vorgesehene Öffnung durchgeführt werden.

Damit die Feder nicht an der Hülse verrutschen kann, kann die Hülse Aussparungen zur Aufnahme der mindestens einen Feder aufweisen.

Die mindestens eine Feder kann in einer bevorzugten Ausführungsform drei Abschnitte aufweisen, von denen ein Abschnitt an einem der Bauteile, ein Abschnitt an der Hülse und ein zwischen diesen Abschnitten angeordneter Abschnitt an der Innenwandung der Hülse anliegt, wobei zwischen dem an der Innenwandung der Hülse anliegenden Abschnitt und dem an dem Bauteil anliegenden Abschnitt eine Schlaufe vorgesehen ist. Dies ist eine sehr einfache aber wirkungsvolle Konstruktion, um die Bauteile aneinander zu drücken.

Die mindestens eine Feder kann aus einem runden Federdraht oder aus einem flachen Federblech gebogen sein. Wenn die in den aneinander zu befestigenden Bauteilen vorgesehene Öffnung ein rundes Loch ist, ist es zweckmäßig die Feder aus einem runden Federdraht herzustellen. Wenn die in den aneinander zu befestigenden Bauteilen vorgesehene Öffnung ein viereckiges Loch ist, ist es zweckmäßig die Feder aus einem flachen Federblech zu fertigen.

Nachfolgend werden verschiedene Ausführungsbeispiele des erfindungsgemäßen Befestigungselements anhand der beiliegenden Zeichnungen näher erläutert.

### Im Einzelnen zeigen:

- Fig. 1: eine erste Ausführungsform des Befestigungselements im vormontierten Zustand;
- Fig. 2: das Befestigungselement aus Fig. 1 im montierten Zustand;
- Fig. 3: eine zweite Ausführungsform des Befestigungselements im vormontierten Zustand;
- Fig. 4: das Befestigungselement aus Fig. 2 im montierten Zustand;
- Fig. 5: eine perspektivische Ansicht auf ein Formrohr aus Fig. 3;
- Fig. 6: eine dritte Ausführungsform des Befestigungselements;
- Fig. 7: eine vierte Ausführungsform des Befestigungselements im montierten Zustand;
- Fig. 8: das Befestigungselement aus Fig. 7 im vormontierten Zustand;
- Fig. 9: eine perspektivische Ansicht auf eine Hülse aus Fig. 7;
- Fig. 10: eine Draufsicht auf eine Feder aus Fig. 7;
- Fig. 11: eine perspektivische Ansicht auf einen Federhalter für eine Feder aus Fig. 12;
- Fig. 12: eine perspektivische Ansicht auf eine zweite Ausführungsform der Feder.

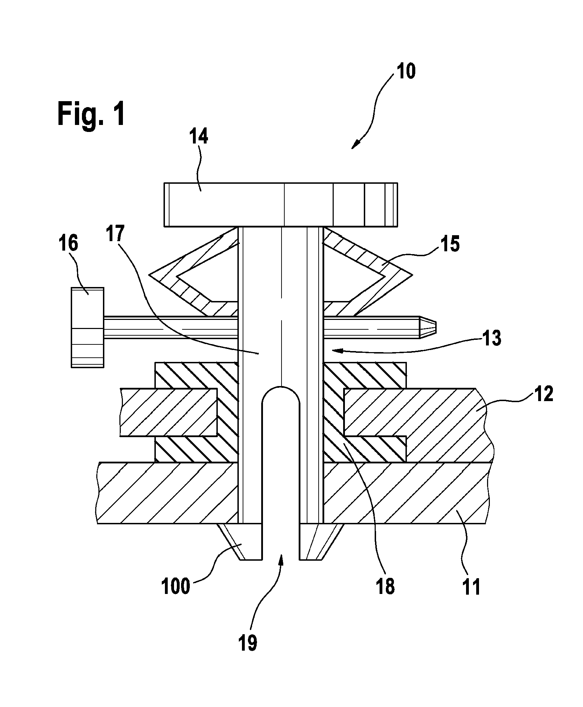

Fig. 1 zeigt ein Befestigungselement 10 zum Befestigen zweier Bauteile 11 und 12. Das Befestigungselement 10 weist ein Halteelement 13 auf, das mit einem Teller 14 versehen ist. Das Halteelement 13 weist einen Schaft 17 auf, der von einer Feder 15 umgeben ist. An dem Teller 14 drückt sich einenends die Feder 15 ab, die anderenends gegen einen Haltestift 16 drückt.

Der Haltestift 16 arretiert die Feder 15 unter einer bestimmten Vorspannung. Zur Montage wird das Befestigungselement 10 in eine in den beiden Bauteilen 11 und 12 vorgesehene Öffnung gesteckt.

Der Schaft 17 des Halteelementes 13 weist eine schlitzförmige Aussparung 19 auf, damit das Halteelement 13 leicht durch die in den Bauteilen 11 und 12 vorgesehene Öffnung gesteckt werden kann.

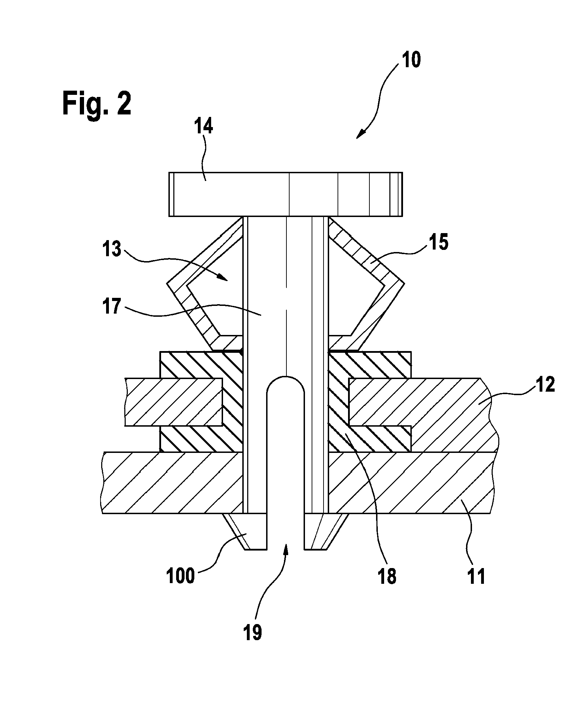

Nach dem das Halteelement 13 durch die Öffnung gesteckt ist, wird der Haltestift 16 aus dem Schaft 17 herausgezogen (siehe Fig. 2). Dadurch drückt die Feder 15 anderenends gegen ein Gummi 18, wodurch das Bauteil 12 nach unten gedrückt wird. Am Ende des Schaftes 17 ist ein Widerhaken 100 vorgesehen. Er drückt das Bauteil 11 nach oben und verhindert, dass das Halteelement 13 nicht von der Feder 15 aus der Öffnung herausgezogen wird (siehe Fign. 1 und 2).

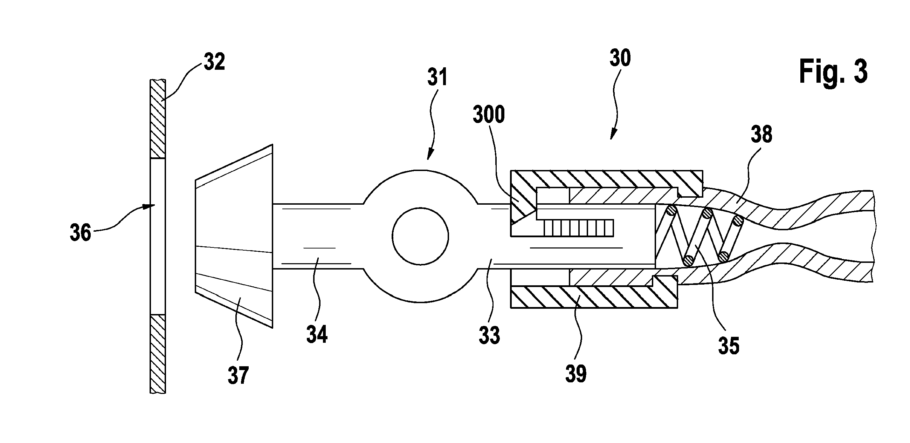

Fig. 3 zeigt ein Befestigungselement 30, mit dem ein Formrohr 31 gegen eine Karosserie 32 gedrückt wird. An dem Formrohr 31 sind zwei gegenüberliegende Bolzen 33 und 34 angeordnet. An dem freien Ende des Bolzens 33 ist eine Feder 35 vorgesehen und am freien Ende des Bolzens 34 ein in eine in der Karosserie 32 vorgesehene Öffnung 36 einsteckbarer Steckpunkt 37. Somit ist das Befestigungselement in das Formrohr 31 integriert.

Am Ende des Bolzens 33 befindet sich ein am Fahrzeug befestigtes Rohr 38, welches das freie Ende des Bolzens 33 umschließt. Die Anbindung des Rohres 38 an das Fahrzeug hat die Funktion eines Widerlagers, wenn die Feder 35 das Formrohr 31 über den Bolzen 33 gegen die Karosserie 32 drückt.

Eine Hülse 39 umschließt das Ende des Rohres 38 und überdeckt einen Teilbereich des Bolzens 33. Die Hülse 39 arretiert die Feder 35 unter einer bestimmten Vorspannung. Dadurch wird vermieden, dass das Formrohr 31 gegen die Karosserie 32 gedrückt wird, bevor der Steckpunkt 37 genau auf die Öffnung 36 ausgerichtet ist.

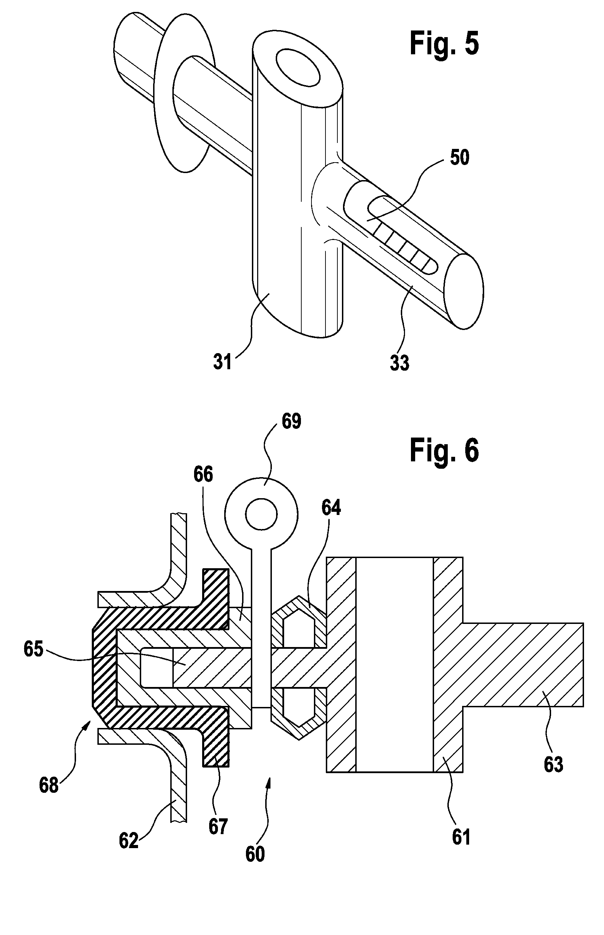

Der Bolzen 33 weist eine Führungsnut 50 auf (siehe Fig. 5) in die ein an der Hülse angeordneter Fortsatz 300 eingreift (siehe Fig. 3). Wenn der Bolzen 33 durch die Feder 35 weggedrückt wird,kann der Fortsatz 300 in der Führungsnut 50 entlang gleiten.

Die Führungsnut 50 verläuft an ihrem dem Formrohr 31 zugewandten Ende quer zur Längsachse des Bolzens 33 (siehe Fig. 5). Durch diesen Verlauf der Führungsnut 50 wird die Hülse in Längsrichtung des Bolzens 33 arretiert, sodass die Feder 35 nicht das Formrohr 31 wegdrücken kann, bevor es endgültig ausgerichtet ist. Um die Arretierung zu lösen, muss die Hülse 39 um einen entsprechenden Winkel gedreht werden, bevor die Feder 35 den Bolzen 33 wegdrücken kann.

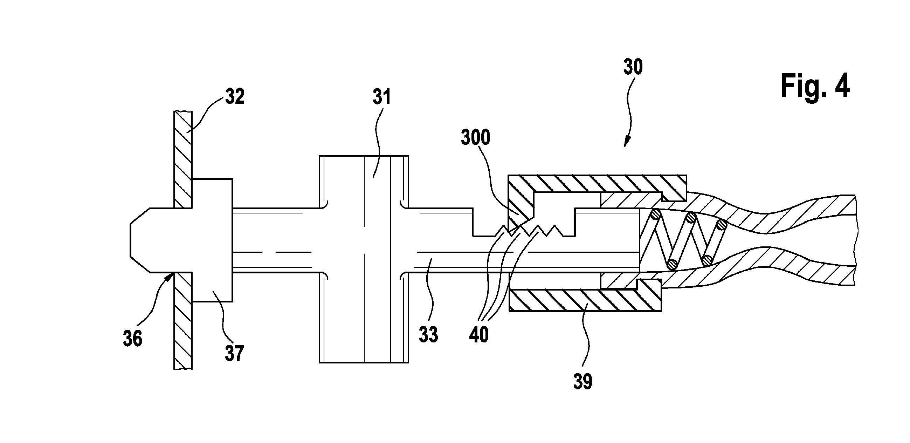

Fig. 4 zeigt das Befestigungselement 30 nach dem der Steckpunkt 37 in die Öffnung 36 der Karosserie 32 gesteckt wurde. Der Fortsatz 300 ist mit in der Führungsnut 50 angeordneten Zähnen 40 verrastet. Die Zähne 40 sind in der Weise ausgebildet, dass die Hülse 39 nur in Richtung des freien Endes des Bolzens 33 und nicht in Richtung des Formrohrs 31 bewegt werden kann. Somit ist das Formrohr 31 sicher an der Karosserie 32 befestigt. Es kann nicht mehr durch Erschütterungen oder andere Kräfte von der Karosserie gelöst werden.

Fig. 6 zeigt eine Befestigungseinrichtung 60, mit der ein Formrohr 61 gegen eine Karosserie 62 gedrückt wird. Das Formrohr 61 ist mit einem Bolzen 63 am Fahrzeug fest verbunden. Der Bolzen 63 übernimmt somit die Funktion eines Widerlagers, damit eine Feder 64 ein auf einem Bolzen 65 verschiebbares Zwischenstück 66 zusammen mit einem über dem Zwischenstück 66 angeordneten Gummiteil 67 in eine in der Karosserie 62 vorgesehene Öffnung 68 drücken kann.

Ein Haltestift 69 arretiert die Feder 64 unter einer bestimmten Vorspannung. Nach dem das Formrohr 61 und der Bolzen 65 genau auf die Öffnung 68 ausgerichtet sind, wird der Haltestift 69 aus dem Bolzen 65 herausgezogen. Dann drückt die Feder 64 gegen das Zwischenstück 66, sodass das Zwischenstück 66 und das Gummiteil 67 in die Öffnung 68 gedrückt werden, wodurch das Formrohr 61 an der Karosserie 62 befestigt ist.

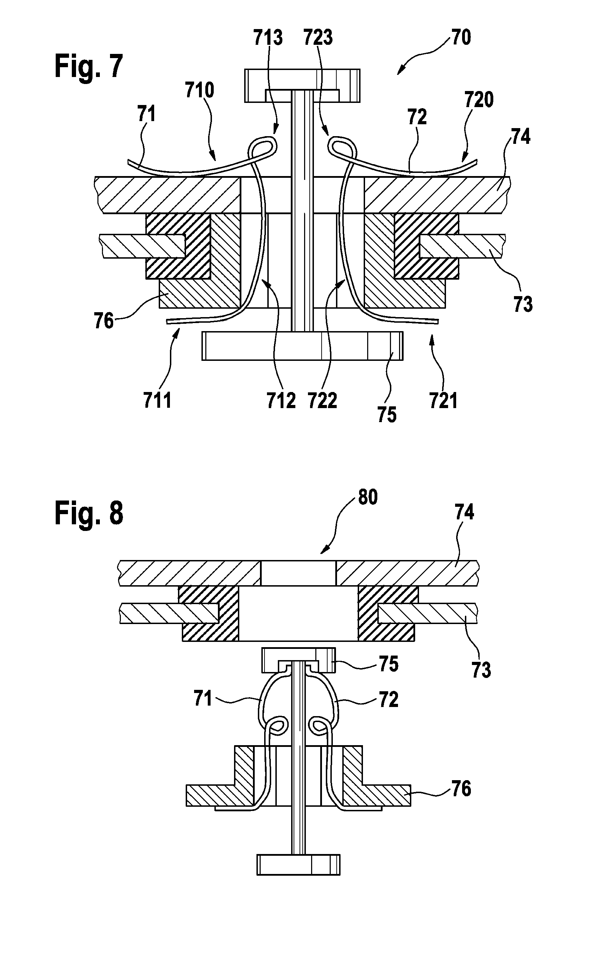

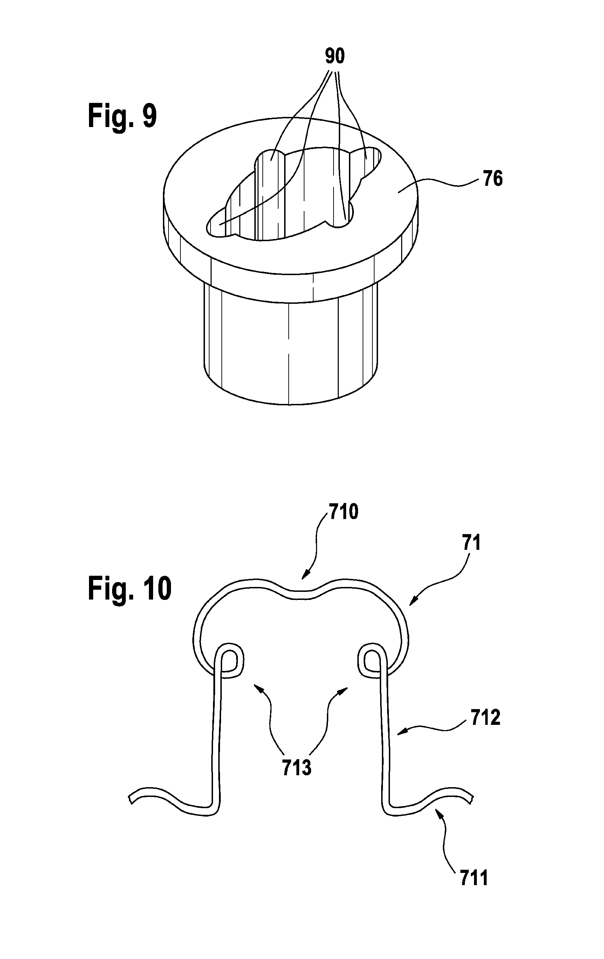

Fig. 7 zeigt ein Befestigungselement 70 mit zwei Federn 71 und 72, die zwei Bauteile 73 und 74 gegeneinander drücken. Die beiden Federn 71 und 72 weisen jeweils einen an dem Bauteil 74 anliegenden Abschnitt 710 und 720, einen an einer Hülse 76 anliegenden Abschnitt 711 und 721 und einen an der Innenwandung der Hülse 76 anliegenden Abschnitt 712 und 722 auf (siehe auch Fig. 10). Zwischen den beiden an dem Bauteil 74 anliegenden Abschnitten 710 und 720 und den beiden an der Innenwandung der Hülse 76 anliegenden Abschnitten 712 und 722 befindet sich eine Schlaufe 713 und 723, die in den Federn 71 und 72 die erforderliche Vorspannung erzeugt.

Das Befestigungselement 70 ist außerdem mit einem Federhalter 75 versehen (siehe Fign. 7 und 8), in welchen die Federn 71 und 72 zur Montage eingehängt und somit vorgespannt werden können. Wenn die Federn 71 und 72 in den Federhalter 75 eingehängt sind, können sie durch eine in den Bauteilen 73 und 74 vorgesehene Öffnung 80 durchgeführt werden. Nach dem die Federn 71 und 72 durch die Öffnung 80 geschoben wurden, wird der Federhalter 75 nach oben gedrückt, sodass die vorgespannten Federn 71 und 72 zur Seite hin umschnappen und die Bauteile 73 und 74 aneinander drücken.

Die Hülse 76 ist erforderlich, um die Federn 71 und 72 mit dem Federhalter 75 vorspannen zu können, da sonst die Abschnitte 711, 721, 712 und 722 nach oben ragen würden, wenn die Abschnitte 710 und 720 in den Federhalter 75 eingehängt sind.

Die Hülse 76 ist mit Aussparungen 90 versehen (siehe Fig. 9), in welchen die Federn 71 und 72 anliegen können. Somit werden die Federn 71 und 72 in der Hülse 76 gegen ein Verrutschen an der Innenwandung in Umfangsrichtung gehindert.

Die Federn 71 und 72 sind aus einem runden Federdraht gefertigt. Diese Ausführung eignet sich besonders gut, wenn die Öffnung 80 (siehe Fig. 8) ein rundes Loch ist.

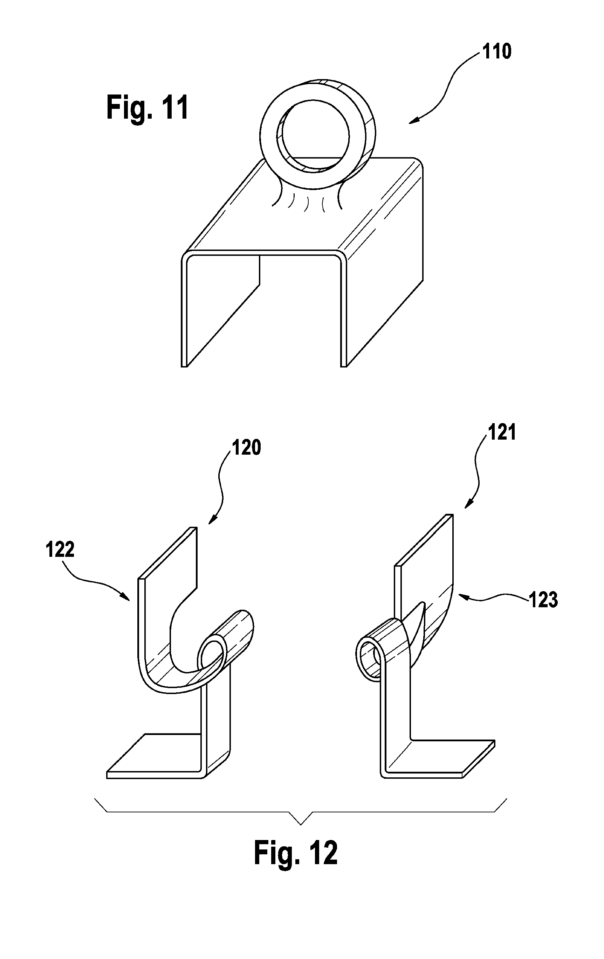

Es ist jedoch auch möglich, dass die Öffnung 80 ein viereckiges Loch ist. Dann ist es zweckmäßig Federn 120 und 121 aus einem flachen Federblech zu fertigen (siehe Fig. 12). Die Federn 120 und 121 werden zum Spannen und zur Montage jeweils mit ihren oberen Abschnitten 122 und 123 in einen Federhalter 110 eingehängt (siehe Fign. 11 und 12).

Selbstverständlich sind auch noch weitere dem Fachmann bekannte Ausgestaltungen der die Bauteile 73 und 74 aneinander drückenden Federn möglich, wobei der Federhalter und die Hülse dann an die Form der Feder und des Federmaterials entsprechend angepasst sind.

## Patentansprüche

1. Befestigungselement (10, 30, 60, 70), um mindestens zwei Bauteile (11, 12, 31, 32, 61, 62, 73, 74) aneinander zu befestigen, insbesondere zur Befestigung einer Scheibenwischanlage an einer Kraftfahrzeugkarosserie (32, 62), **dadurch gekennzeichnet, dass** die mindestens zwei Bauteile (11, 12, 31, 32, 61, 62, 73, 74) mittels mindestens einer Feder (15, 35, 64, 71, 72, 120, 121) aneinander befestigbar sind.

2. Befestigungselement (10, 30, 60, 70) nach Anspruch 1, **dadurch gekennzeichnet, dass** die mindestens eine Feder (15, 35, 64, 71, 72, 120, 121) eine Drahtfeder, eine Kunststofffeder, eine pneumatische Feder oder dergleichen ist.

3. Befestigungselement (10) nach Anspruch 1 oder 2, **dadurch gekennzeichnet, dass** es ein Halteelement (13) aufweist, das einenends durch die zu befestigenden Bauteile (11, 12) steckbar ist, und das anderenends eine Abstützeinrichtung aufweist, an der sich die gegen eines der Bauteile (11, 12) drückende Feder (15) abstützt, wobei das Halteelement (13) gegen ein Herausziehen aus den Bauteilen arretierbar ist.

4. Befestigungselement (10) nach Anspruch 3, **dadurch gekennzeichnet, dass** das Halteelement (13) einen bolzenförmigen Schaft (17) aufweist, der durch die Feder (15) gesteckt ist.

5. Befestigungselement (10) nach Anspruch 3 oder 4, **dadurch gekennzeichnet, dass** das Halteelement (13) an seinem durch die Bauteile (11, 12) steckbaren Ende eine schlitzförmige Aussparung (19) aufweist.

6. Befestigungselement (10) nach einem der Ansprüche 3 bis 5, **dadurch gekennzeichnet, dass** das Halteelement (13) an seinem durch die Bauteile (11, 12) steckbaren Ende einen Widerhaken (100) aufweist.

7. Befestigungselement (10) nach einem der Ansprüche 3 bis 6, **dadurch gekennzeichnet, dass** die Feder (15) mit einem Haltestift (16) unter einer bestimmten Vorspannung arretierbar ist, wobei der Haltestift (16) lösbar durch den Schaft (17) gesteckt ist.

8. Befestigungselement (30, 60)nach Anspruch 1 oder 2, **dadurch gekennzeichnet, dass** ein Formrohr (31, 61) mittels der Feder (35, 64) mit der Karosserie (32, 62) verspannbar ist.

9. Befestigungselement (30) nach Anspruch 8, **dadurch gekennzeichnet, dass** an dem Formrohr (31) quer zu dessen Längsrichtung zwei gegenüberliegende Bolzen (33, 34) angeordnet sind, wobei an einem freien Ende des einen Bolzens (33) die Feder (35) angeordnet ist, und am freien Ende des anderen Bolzens (34) ein in eine in der Karosserie (32) vorgesehene Öffnung (36) einsteckbarer Steckpunkt (37) angeordnet ist.

10. Befestigungselement (30) nach Anspruch 9, **dadurch gekennzeichnet, dass** die Feder (35) mit einer entlang des Bolzens (33) verschiebbaren Hülse (39) unter einer bestimmten Vorspannung arretierbar ist.

11. Befestigungselement (30) nach Anspruch 10, **dadurch gekennzeichnet, dass** der Bolzen (33) eine Führungsnut (50) aufweist, in die ein an der Hülse (39) angeordneter Fortsatz (300) eingreift.

12. Befestigungselement (30) nach Anspruch 11, **dadurch gekennzeichnet, dass** die Führungsnut (50) mit Zähnen (40) versehen ist, wobei die Zähne (40) in der Weise ausgebildet sind, dass die Hülse (39) nur in Richtung des freien Endes des Bolzens (33) bewegbar ist.

13. Befestigungselement (30) nach Anspruch 11 oder 12, **dadurch gekennzeichnet, dass** die Führungsnut (50) an ihrem dem Formrohr (31) zugewandten Ende quer zur Längsachse des Bolzens (33) verläuft.

14. Befestigungselement (30) nach einem der Ansprüche 10 bis 13, **dadurch gekennzeichnet, dass** die Hülse (39) mit einem am Fahrzeug befestigten Rohr (38) verbunden ist.

15. Befestigungselement (60) nach Anspruch 8, **dadurch gekennzeichnet, dass** an dem Formrohr (61) quer zu dessen Längsrichtung zwei gegenüberliegende Bolzen (63, 65) angeordnet sind, wobei über einen der Bolzen (65) die Feder (64) gesteckt ist.

16. Befestigungselement (60) nach Anspruch 15, **dadurch gekennzeichnet, dass** die Feder (64) mit einem lösbaren Haltestift (69) unter einer bestimmten Vorspannung arretierbar ist, wobei der Haltestift (69) lösbar durch den Bolzen (65) gesteckt ist.

17. Befestigungselement (60) nach Anspruch 15 oder 16, **dadurch gekennzeichnet, dass** einer der Bolzen (63) mit dem Fahrzeug verbunden ist.

18. Befestigungselement (70) nach Anspruch 1 oder 2, **dadurch gekennzeichnet, dass** die mindestens eine Feder (71, 72, 120, 121) im montierten Zustand, die zu befestigenden Bauteile (73, 74) umgreift.

19. Befestigungselement (70) nach Anspruch 18, **dadurch gekennzeichnet, dass** ein Federhalter (75) und eine die mindestens eine Feder (71, 72, 120, 121) umgebende Hülse (76) die Feder (71, 72, 120, 121) zur Montage vorspannt.

20. Befestigungselement (70) nach Anspruch 19, **dadurch gekennzeichnet, dass** die Hülse (76) Aussparungen (90) zur Aufnahme der mindestens einen Feder (71, 72) aufweist.

21. Befestigungselement (70) nach einem der Ansprüche 18 bis 20, **dadurch gekennzeichnet, dass** die mindestens eine Feder (71, 72) drei Abschnitte (710, 711, 712, 720, 721, 722) aufweist, von denen ein Abschnitt (710, 720) an einem der Bauteile (74), ein Abschnitt (711, 721) an der Hülse (76) und ein zwischen diesen Abschnitten (710, 711, 720, 721) angeordneter dritter Abschnitt (712, 722) an der Innenwandung der Hülse (76) anliegt, wobei zwischen dem an der Innenwandung der Hülse (76) anliegenden Abschnitt (712, 722) und dem an dem Bauteil (74) anliegenden Abschnitt (710, 720) eine Schlaufe (713, 723) vorgesehen ist.

22. Befestigungselement (70) nach einem der Ansprüche 18 bis 21, **dadurch gekennzeichnet, dass** die mindestens eine Feder (71, 72, 120, 121) aus einem runden Federdraht oder aus einem flachen Federblech gebogen ist.
